# EUROPÄISCHE PATENTSCHRIFT

(11) **EP 3 681 669 B1**
(45) Veröffentlichungstag und Bekanntmachung des Hinweises auf die Patenterteilung: **29.05.2024**
(21) Anmeldenummer: 18765424.9
(22) Anmeldetag: 04.09.2018
(51) Int. Cl.: B23P 15/28, B23P 15/34, B23C 3/34, B23C 5/04, C23C 4/02, B23K 26/361, B23K 31/10, B23H 1/00

(54) **AUFRAUWERKZEUG UND VERFAHREN ZU DESSEN HERSTELLUNG**
ROUGHING TOOL AND METHOD FOR THE PRODUCTION THEREOF
OUTIL DE RUGOSIFICATION ET PROCÉDÉ DE FABRICATION ASSOCIÉ

(30) Priorität: 14.09.2017 DE 102017121354
(43) Veröffentlichungstag der Anmeldung: 22.07.2020
(73) Patentinhaber: Gühring KG, 72458 Albstadt (DE)
(72) Erfinder: TEUSCH, Bruno, 73733 Esslingen (DE)
(74) Vertreter: Winter, Brandl - Partnerschaft mbB
(86) Internationale Anmeldenummer: PCT/EP2018/073693
(87) Internationale Veröffentlichungsnummer: WO 2019/052850

(56) Entgegenhaltungen:
- DE-A1-102011 116 974
- JP-A- S60 146 620
- JP-A- 2006 088 242
- US-A1- 2003 223 830
- US-A1- 2017 120 352

## Beschreibung

Die Erfindung betrifft ein Verfahren zum Herstellen eines Aufrauwerkzeugs, insbesondere eines Zirkularfräsers, sowie ein Aufrauwerkzeug, welches durch ein solches Herstellungsverfahren hergestellt wurde.

Es ist hinlänglich bekannt, dass tribologisch hoch beanspruchte Oberflächen von Bohrungen in metallischen Werkstücken, z. B. der Kolbenlaufflächen von Zylinderbohrungen oder der Zylinderbuchsen in einem Verbrennungsmotor, mit Hilfe spanloser oder spanabhebender Werkzeuge mechanisch aufgeraut werden, um eine gute Haftgrundlage für eine insbesondere durch thermisches Spritzen aufzutragende Oberflächenschicht zu erhalten.

Zwei im Stand der Technik bekannte Ansätze für einem solches Aufrauen einer Zylinderbohrung sind das Einbringen von Mikrorillen bzw. Mikronuten mit und ohne Vorschub. Werkzeuge zum Einbringen von Mikrorillen mit Vorschub, wie sie bspw. aus der DE 10 2009 028 040 A1 bekannt sind, verfügen oft nur über vereinzelte Schneidzähne oder eine im Vergleich zur Bohrlochtiefe kurze mikroverzahnte Schneide, die unter geringem Vorschub eine gewindeartige Struktur erzeugen/erzeugt. Auf diese Weise greifen die die Mikrorillenstruktur erzeugenden Schneidzähne nacheinander während der mit Vorschub überlagerten Drehung des Werkzeugs in derselben Nut ein. Naturgemäß sind bei einem solchen Vorgehen nur geringe Vorschubgeschwindigkeiten möglich, was relativ lange Fertigungszeiten nach sich zieht. Zur Lösung dieses Problems wurden vorschublose Aufrauwerkzeuge entwickelt, die eine Vielzahl von in Axialrichtung versetzten Schneiden aufweisen, welche akkumuliert einen Schneidteil des Werkzeugs bilden, der in seiner axialen Länge der Tiefe des aufzurauenden Bohrlochs entspricht. Folglich können solche Werkzeuge die gesamte zu bearbeitende Fläche mit einem einzigen Schnitt bearbeiten. Aufgrund des fehlenden Vorschubs müssen solche Aufrauwerkzeuge einen kleineren Durchmesser als das aufzurauende Bohrloch aufweisen um in dieses einführbar zu sein. Um das Schneidteil des Aufrauwerkzeugs dennoch mit der Bohrungsmantelfläche in Eingriff zu bringen, werden derartige Schaftwerkzeuge oft als Zirkularfräser konzipiert, d.h. eine Rotation um eine Schaftachse wird mit einer Bewegung des Werkzeugs auf einer Kreisbahn überlagert. In der JP 2006 - 088 242 A werden ein Verfahren nach dem Oberbegriff des Anspruchs 1 und ein Werkzeug nach dem Oberbegriff des Anspruchs 9, insbesondere ein Bohrer mit vier beschichteten Schneiden zum Aufrauen von Zylinderbohrungen offenbart. Des Weiteren offenbart DE 10 2011 116 974 A1 ein Verfahren zur Herstellung einer Führungsfase für ein schneidendes Werkzeug. In US 2003 / 0 223 830 A1 wird ein Werkzeug mit einem Multi-Spitzen-Diamant für die Erzeugung von Rillen offenbart. Weiterhin zeigt die US 2017 / 0 120 352 A1 ein Fräswerkzeug mit einer Vielzahl von Schneideinsätzen.

Es ist ein lange bestehendes Problem auf dem Gebiet der Herstellung der vorstehend beschriebenen Aufrauwerkzeuge, dass der Aufbau bzw. die Montage eines Aufrauwerkzeugs mit einer Vielzahl filigraner Schneiden bzw. Schneidleisten zeitaufwändig und anspruchsvoll ist. Insbesondere die Feinjustierung der axialen und radialen Position der einzelnen Schneiden gestaltet sich äußerst aufwendig, da die einzelnen Schneidzähne in beiden Freiheitsgraden auf wenige Mikrometer genau justiert werden müssen, um eine hohe Rundlaufgenauigkeit und eine qualitativ hochwertige Mikrorillenstruktur herzustellen. Insbesondere bei vorschublosen Aufrauwerkzeugen, welche oftmals mit zwölf oder mehr Einzelschneiden bestückt sind kann die Feinjustierung einen erheblichen Zeitaufwand nach sich ziehen, teils mit unbefriedigendem Ergebnis.

Die vorliegende Erfindung hat daher die Aufgabe, ein Aufrauwerkzeug sowie ein Verfahren zum Herstellen eines solchen Aufrauwerkzeugs bereitzustellen, das sich durch eine vergleichsweise hohe Bearbeitungsgenauigkeit sowie Montagefreundlichkeit und Justiergenauigkeit auszeichnet.

Diese Aufgabe wird durch ein Verfahren zur Herstellung eines Aufrauwerkzeugs mit den Merkmalen des Anspruchs 1 gelöst. Vorteilhafte Weiterbildungen und Ausführungsformen sind Gegenstand abhängiger Ansprüche. Vorrichtungstechnisch wird die oben genannte Aufgabe durch ein Aufrauwerkzeug mit den Merkmalen des Anspruchs 9 verwirklicht.

Beim erfindungsgemäßen Verfahren zur Herstellung eines Aufrauwerkzeugs wird in einem ersten Schritt eine Mantelfläche eines um eine Drehachse drehantreibbaren Werkzeuggrundkörpers mit zumindest einem Schneidelementrohling derart bestückt, dass eine freie Kante des Schneidelementrohlings im montierten Zustand aus der Mantelfläche hervorsteht. Der Schneidelementrohling kann bspw. als Schneidplatte, Schneidleiste, Schneideinsatz oder vergleichbarer Schneidkörper ausgebildet sein und zeichnet sich dadurch aus, dass seine freie Kante (die spätere Schneide) noch nicht das endgültige Soll-Schneidprofil aufweist (bspw. als gerade Kante oder geometrisch undefinierte Kante vorliegt). In einem darauffolgenden Schritt wird durch ein thermisch abtragendes Verfahren eine Mikroverzahnung (ein Schneidprofil) mit einer Vielzahl axial beabstandeter Schneidzähne in die freie Kante des am Werkzeuggrundkörper vormontierten Schneidelementrohlings eingebracht. Beim Bestücken des Werkzeuggrundkörpers mit den Schneidelementrohlingen werden die Schneidelementrohlinge in am Werkzeuggrundkörper montierten axial und radial einstellbaren Kassetten lösbar fixiert und anschließend axial und/oder radial vorjustiert, bevor die Mikroverzahnung eingebracht wird.

Erfindungsgemäß werden gleichzeitig mit dem abtragenden Einbringen der Mikroverzahnung (des Schneidprofils) die einzelnen Schneidzähne auf ein exaktes Maß eines jeweiligen Nenndurchmessers gebracht. Man könnte auch sagen, dass aus den freien Kanten der vormontierten Schneidelementrohlinge in einem thermisch abtragenden Verfahren Schneidzähne herausgearbeitet werden, die im selben Zuge auf einen Soll-Flugkreisdurchmesser feinjustiert werden.

Im Gegensatz zu gängigen Fertigungsverfahren, in denen die Schneidelemente bereits mit dem endgültigen Schneidprofil am Werkzeuggrundkörper montiert werden und bei der Montage durch Verändern der Schneidelementposition feinjustiert werden müssen, reicht bei dem erfindungsgemäßen Verfahren ein grobes Vorjustieren der Schneidelementrohlinge. Bei der anschließenden abtragenden Feinjustierung können die einzelnen Schneidzähne der Mikroverzahnung vergleichsweise schnell und mit vergleichsweise höherer Genauigkeit auf den Nenndurchmesser gebracht werden. Das erfindungsgemäße Fertigungsverfahren ermöglicht also eine schnellere Fertigung eines Aufrauwerkzeugs bei zugleich höherer Rundlaufgenauigkeit.

Bevorzugt handelt es sich bei dem thermisch abtragenden Verfahren um (Funken-)Erodieren, mit welchem sich berührungslos und mit hoher Genauigkeit komplexe Geometrien in die freien Kanten der Schneidelementrohlinge einbringen lassen.

Gemäß einer bevorzugten Ausführungsform der Erfindung kann der Werkzeuggrundkörper mit einer Vielzahl von in Axial- und/oder Umfangsrichtung versetzten Schneidelementrohlingen bestückt werden, in deren freie Kanten dann im vormontierten Zustand die Mikroverzahnung abtragend eingebracht wird.

Gemäß einem weiter bevorzugten Aspekt der Erfindung können beim Bestücken des Werkzeuggrundkörpers zumindest ein erster und ein zweiter Schneidelementrohling in Umfangsrichtung fluchtend und voneinander winkelbeabstandet, insbesondere einander diametral gegenüberliegend, an der Mantelfläche des Werkzeuggrundkörpers montiert werden und beim Einbringen der Mikroverzahnung der erste und der zweite Schneidelementrohling derart abtragend bearbeitet werden, dass die einzelnen Schneidzähne der jeweilig resultierenden Schneidelemente nach dem Abtragen in Umfangsrichtung fluchtend angeordnet sind. In anderen Worten können auch die (axiale) Länge und/oder die axiale Position der einzelnen Schneidzähne im selben Zuge mit dem abtragenden Einbringen der Mikroverzahnung feinjustiert werden. In Umfangsrichtung fluchtend heißt in anderen Worten, dass die Schneidzähne der Schneidelemente eines Scheibenfräsers axial gleich angeordnet sind bzw. die Schneidelemente eines Scheibenfräsers gleiche Schneidprofile aufweisen bzw. bei einer Rotation des Aufrauwerkzeugs um die Drehachse denselben Flugkreis abfahren/ Schnitt durchführen.

Bevorzugt kann beim Einbringen der Mikroverzahnung jeder Schneidzahn als ein durch eine vorgegebene Länge und Höhe definiertes Rechteckprofil gefertigt werden.

Um vorteilhafte Hafteigenschaften der bearbeiteten Oberfläche zu erzielen kann die vorgegebene Länge im Bereich von 200 µm bis 400 µm und die vorgegebene Höhe im Bereich von 60 µm bis 300 µm liegt. Zudem kann vorteilhafter Weise der axiale Abstand zwischen zwei aufeinander folgenden Zähnen im Bereich von 100 µm bis 1000 µm liegen.

Um über die gesamte Bearbeitungslänge der zylindrischen Oberfläche eine gleichbleibende Oberflächenqualität und damit eine gleichbleibende Haftgrundlage für eine spätere Beschichtung zu erhalten, werden die Schneidzähne des wenigstens einen Schneidelements vorzugsweise im Wesentlichen in gleichen axialen Abständen, d.h. mit gleicher axialer Teilung, angeordnet und mit gleichen Zahnprofilen versehen. Gleich gestaltete Schneidelemente tragen zu einer einfachen Herstellung der Schneidelemente bzw. Schneidleisten bei, wodurch die Montage des Aufrauwerkzeugs vereinfacht und die Herstellkosten gering gehalten werden.

Gemäß einem weiter bevorzugten Aspekt der Erfindung kann in einem vorgelagerten Fertigungsschritt beim Fertigen des Werkzeuggrundkörpers eine Anzahl von in Axial-und/oder Umfangsrichtung versetzten Ausnehmungen in die Mantelfläche des Werkzeuggrundkörpers eingebracht werden, welche nachfolgend mit den Schneidelementrohlingen bestückt werden. Weiter bevorzugt können in einem weiteren Fertigungsschritt Halteeinrichtungen zum lösbaren Aufnehmen und Haltern der Schneidelementrohlinge in den Ausnehmungen fixiert werden. Eine lösbare Halterung der Schneidelemente hat den Vorteil, dass sich das Werkzeug einfach mit neuen Schneiden bestücken lässt, bspw. bei Verschleiß oder falls das Werkzeug mit einem neuen abweichenden Verzahnungsprofil ausgestattet werden soll.

Besonders bevorzugt können die Halteeinrichtungen axial und/oder radial einstellbar ausgebildet sein. Besonders bevorzugt können die Halteeinrichtungen als einstellbare Kassetten zum lösbaren Aufnehmen und Haltern der Schneidelemente ausgebildet sein. Bevorzugt kann dabei die gesamte Kassette mit der darin gehalterten Schneide axial und/oder radial eingestellt werden. Es sind jedoch ebenso Ausführungsformen angedacht, in welche die Schneide bspw. mittels Stellschrauben in ihrer Relativposition innerhalb der Kassette einstellbar ist. Ebenso können alternativ auch einstellbare Klemmpratzen oder dergleichen anstelle von Kassetten als Halteeinrichtungen verwendet werden.

Bei einer solchen Ausführungsform mit axial und/oder radial einstellbaren Kassetten kann beim Bestücken des Werkzeuggrundkörpers der zumindest eine Schneidelementrohling in der Kassette montiert und anschließend axial und radial vorjustiert werden. Es findet also vorteilhafter Weise eine Vorjustierung des zumindest einen Schneidelementrohlings vor der Feinjustierung, die mit dem Einbringen der Verzahnung geschieht, statt. Dies hat den Vorteil, dass bei vorjustierten Schneidelementrohlingen (bzw. Vorausrichtung deren freien Kanten) weniger Material zum Einbringen der Mikroverzahnung abgetragen werden muss. Dies verringert zum einen den Materialverbrauch und beschleunigt zum anderen die Fertigung.

Gemäß einer bevorzugten Ausführungsform der Erfindung kann bei oder nach dem Einbringen der Mikroverzahnung in die Schneidelemente ein vorbestimmter Versatz in Axialrichtung, vorzugsweise zwischen 100 µm und 1000 µm, zwischen zwei jeweils in Umfangsrichtung aufeinanderfolgende Schneidelemente eingebracht werden. Bevorzugt können beim Einbringen der Mikroverzahnung der erste Schneidelementrohling und ein dritter in Umfangsrichtung auf den ersten Schneidelementrohling folgender Schneidelementrohling derart abtragend bearbeitet werden, dass deren Mikroverzahnungsprofile im Wesentlichen deckungsgleich sind. Mittels der Kassetten kann in einem solchen Falle nachträglich der (axiale) Versatz zwischen den in Umfangsrichtung aufeinanderfolgenden Schneidelementen eingestellt werden. Durch einen geringen Versatz zwischen in Umfangsrichtung aufeinanderfolgenden Schneidelementen kann die Beanspruchung der einzelnen Schneidelemente verringert werden, da jedes einzelne Element nur noch einen Teil der Mikrorillenstruktur aus der zu bearbeitenden Oberfläche schneiden muss.

In einer besonders bevorzugten Ausführungsform kann der (axiale) Versatz zwischen in Umfangsrichtung aufeinanderfolgenden Schneidelementen derart ausgewählt werden, dass die Schneidzähne des dritten Schneidelements in Axialrichtung gesehen jeweils, insbesondere mittig, zwischen zwei Schneidzähnen des ersten Schneidelements angeordnet sind. Selbstverständlich muss hierzu der Axialabstand zwischen den Schneidzähnen größer gewählt werden als die axiale Länge der einzelnen Schneidzähne. Eine solche Auslegung von Axialversatz und Schneidprofilen in Umfangsrichtung aufeinanderfolgender Schneidelemente wirkt sich vorteilhaft auf die Schwingeigenschaften des Werkzeugs bei der Bearbeitung aus und verringert die Belastung der einzelnen Schneidelemente.

Gemäß einem weiter bevorzugten Aspekt der Erfindung können die Schneidelementrohlinge beim Bestücken des Werkzeuggrundkörpers in zumindest zwei in Axialrichtung benachbarten Gruppen aus jeweils in Umfangsrichtung äquidistant winkelbeabstandet aufeinanderfolgenden (und in Axialrichtung im Wesentlichen auf einer Höhe liegenden) Schneidelementrohlingen angeordnet werden. Besonders bevorzugt können drei axial benachbarte Vierergruppen von jeweils in Umfangsrichtung um 90° winkelbeabstandeten Schneidelementen vorgesehen sein.

Es ist von Vorteil, wenn in Axialrichtung benachbarte Gruppen von Schneidelementrohlingen in Umfangsrichtung jeweils um einen vorbestimmten Winkel, insbesondere um 45°, gegeneinander versetzt angeordnet werden, um einen Zeitversatz zwischen dem Eingreifen der Schneidelemente der einzelnen Gruppen zu erzeugen.

Vorteilhafter Weise können die Schneidelementrohlinge aus einem hochharten Schneidstoff, bevorzugt einem Hartmetall (HM), polykristallinem Diamant (PKD) oder kubischem Bornitrid (CBN) gefertigt sein. Besonders bevorzugt können die Schneidelementrohlinge aus PKD urformend gefertigt, insbesondere gesintert, sein.

Gemäß einem weiter bevorzugten Ausführungsbeispiel kann der Werkzeuggrundkörper in einem vorgeschalteten Fertigungsschritt aus einem Stahl gefertigt werden. Es ist weiter von Vorteil, wenn beim Fertigen des Werkzeuggrundkörpers ein innenliegendes Kühlschmiermittelversorgungssystem zum Versorgen der Schneidelemente mit Kühlschmiermittel eingebracht wird.

Ein weiterer Aspekt der vorliegenden Erfindung betrifft ein Aufrauwerkzeug, insbesondere einen Zirkularfräser mit einem um eine Drehachse drehantreibbaren Werkzeuggrundkörper und einer Anzahl an in einer Mantelfläche des Werkzeuggrundkörpers angeordneten Schneidelementen. Erfindungsgemäß weisen die Schneidelemente eine im am Werkzeuggrundkörper vormontierten Zustand in einem thermisch abtragenden, erfindungsgemäßen Verfahren eingebrachte und auf ein vorbestimmtes Nennmaß gebrachte Mikroverzahnung mit einer Vielzahl axial beabstandeter Schneidzähne auf. Ein derart hergestelltes Aufrauwerkzeug zeichnet sich durch eine mit anderen Justierungsverfahren kaum erreichbare Rundlaufgenauigkeit aus, d.h. die Abweichung der einzelnen Schneidzähne vom Nenndurchmesser des Werkzeugs ist besonders gering.

Gemäß einer bevorzugten Ausführungsform kann der Werkzeuggrundkörper einen Schaftabschnitt aufweisen, welcher mit einer entsprechenden Werkzeugmaschine in Eingriff bringbar ist, und einen Aufnahmeabschnitt aufweisen, an welchem die Schneidelemente angeordnet sind. Der mit den Schneidelementen bestückte Aufnahmeabschnitt kann einen Schneidteil des Werkzeugs bilden. Bevorzugt kann der Schneidteil des Werkzeugs so ausgelegt werden, dass dieser in seiner Axiallänge größer oder gleich der Bohrlochtiefe des zu bearbeitenden Bohrlochs ist. Auf diese Weise kann das Werkzeug mit einem einzigen Schnitt die gesamte aufzurauende Oberfläche bearbeiten.

Gemäß einer bevorzugten Ausführungsform der Erfindung kann eine Anzahl von in Axial- und/oder Umfangsrichtung versetzten Ausnehmungen in die Mantelfläche des Werkzeuggrundkörpers eingebracht sein, welche nachfolgend mit den Schneidelementrohlingen bestückt werden. Weiter bevorzugt können in den Ausnehmungen Halteeinrichtungen zum lösbaren Aufnehmen und Haltern der Schneidelementrohlinge in den Ausnehmungen fixiert werden. Eine lösbare Halterung der Schneidelemente hat den Vorteil, dass sich das Werkzeug einfach mit neuen Schneiden bestücken lässt, bspw. bei Verschleiß oder falls das Werkzeug mit einem neuen abweichenden Verzahnungsprofil ausgestattet werden soll.

Besonders bevorzugt können die Halteeinrichtungen als axial und/oder radial einstellbare Schneidenträger/Kassetten ausgebildet sein. Mittels solcher einstellbarer Kassetten lassen sich die Schneidelemente wie vorstehend beschrieben vorjustieren und bei Verschleiß schnell austauschen.

Bevorzugt können die Schneidelemente in mehreren in Axialrichtung versetzten Gruppen von, vorzugsweise äquidistant winkelbeabstandeten, in Umfangsrichtung aufeinanderfolgenden Schneidelementen angeordnet werden.

Gemäß einem bevorzugten Aspekt der Erfindung können die axial benachbarten Gruppen von in Umfangsrichtung aufeinanderfolgenden Schneidelementen gegeneinander verdreht/winkelbeabstandet sein. Weiter bevorzugt können besagte Gruppen sich in Axialrichtung teilweise, vorzugsweise im Bereich zwischen 300 und 1000 µm, überlappen, um ein kontinuierliches Schneidprofil über das gesamte Schneidteil des Werkzeugs zu bilden.

Gemäß einem bevorzugten Aspekt der Erfindung können die Schneidelemente aus einem hochharten Schneidstoff, bevorzugt einem Hartmetall (HM), polykristallinem Diamant (PKD) oder kubischem Bornitrid (CBN) und der Werkzeuggrundkörper aus Stahl gefertigt sein.

Gemäß einem weiter bevorzugten Ausführungsbeispiel kann der Werkzeuggrundkörper ein innenliegendes Kühlschmiermittelversorgungssystem zum Versorgen der Schneidelemente mit Kühlschmiermittel eingebracht aufweisen. Besonders bevorzugt können Kühlmittelkanäle in den Ausnehmungen münden, in welchen die Schneidelemente angeordnet werden.

Mit Hilfe der beigefügten Zeichnungen wird im Folgenden eine bevorzugte Ausführungsform eines erfindungsgemäßen Aufrauwerkzeugs beschrieben. In den Zeichnungen zeigt die
Fig. 1 eine perspektivische Ansicht eines erfindungsgemäßen Aufrauwerkzeugs;
Fig. 2a eine in Fig. 1 eingekreiste Einzelheit A in einem größeren Maßstab;
Fig. 2b eine in Fig. 1 eingekreiste Einzelheit F in einem größeren Maßstab;
Fig. 2c eine in Fig. 1 eingekreiste Einzelheit D in einem größeren Maßstab;
Fig. 3 eine Seitenansicht des erfindungsgemäßen Aufrauwerkzeugs;
Fig. 4 eine gegenüber der Fig. 3 um 90° rotierte Seitenansicht des erfindungsgemäßen Aufrauwerkzeugs;
Fig. 5 eine Frontansicht des erfindungsgemäßen Aufrauwerkzeugs; und
Fign. 6a bis 6c ein schematischer Ablauf eines Fertigungsverfahrens gemäß einer bevorzugten Ausführungsform der Erfindung.

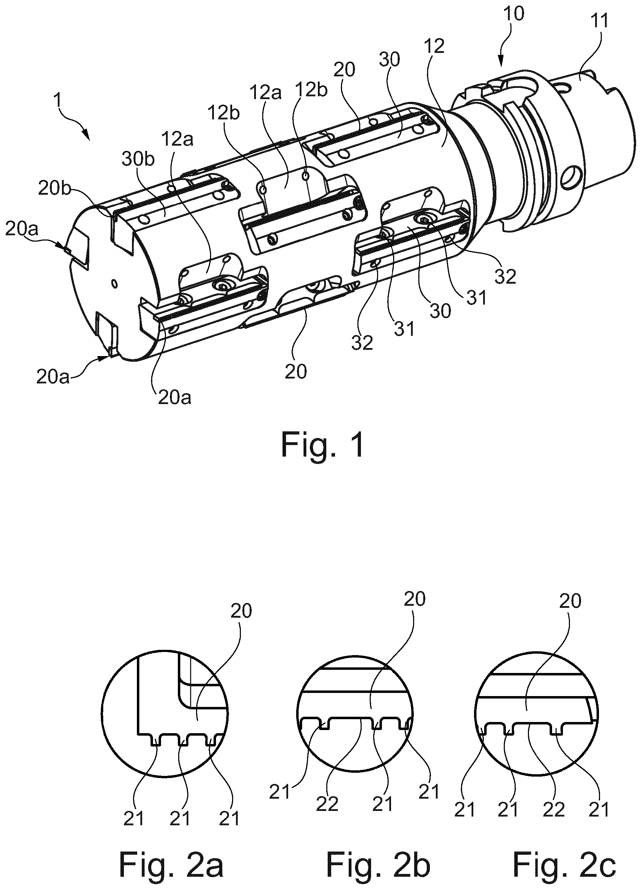

Im Folgenden wird mit Hilfe der Fig. 1 bis 5 eine bevorzugte Ausführungsform eines erfindungsgemäßen und mittels eines erfindungsgemäßen Fertigungsverfahrens hergestellten Aufrauwerkzeugs 1 näher beschrieben. Das als ein Zirkularfräswerkzeug ausgeführte Aufrauwerkzeug 1 ist dafür konzipiert, eine zylindrische Oberfläche einer Bohrung in einem insbesondere metallischen Werkstück, z.B. der Kolbenlauffläche einer Zylinderbohrung oder einer Zylinderbuchse in einem Verbrennungsmotor, mechanisch aufzurauen, indem in die Oberfläche eine definierte Mikrostruktur aus einer Vielzahl von in einem axialen Abstand voneinander angeordneten umlaufenden Mikrorillen eingebracht wird, um eine gute Haftgrundlage für eine insbesondere durch thermisches Spritzen aufzutragende Oberflächenschicht zu erhalten.

Das Aufrauwerkzeug 1 hat zu diesem Zweck einen in den Figuren gezeigten modularen Aufbau, der einen um eine Längsmittel- bzw. Drehachse 2 drehantreibbaren Werkzeuggrundkörper 10 und eine Vielzahl von, in der gezeigten Ausführungsform zwölf, in Axial- und/oder Umfangsrichtung versetzt angeordneten umfangsschneidenden Schneidelementen bzw. Schneidleisten/-werkzeugen 20 aufweist.

Der Werkzeuggrundkörper 10 kann funktional in einen Schaftabschnitt 11 und einen Aufnahmeabschnitt 12 unterteilt werden. Über den Schaftabschnitt 11 kann das Aufrauwerkzeug 1 mit einer Trenn- oder Schnittstelle eines (nicht gezeigten) Werkzeugmaschinensystems verbunden werden. In der gezeigten Ausführungsform weist der Schaftabschnitt 11 hierzu einen dem Fachmann bekannten Hohlschaftkegel (HSK) auf. In der gezeigten Ausführungsform, in der der Grundkörper 10 über einen Schaftabschnitt 11 verfügt, bildet das Aufrauwerkzeug 1 daher ein Schaftfräswerkzeug. Der Aufnahmeabschnitt 12, der eine im Wesentlichen kreiszylindrische Verlängerung des Grundkörpers 10 bildet, trägt die Vielzahl von Schneidelementen 20. Die Schneidelemente 20 haben alle die gleiche Nennlänge, und bilden zusammen mit dem Aufnahmeabschnitt 12 einen Schneidteil 13 des Aufrauwerkzeugs 1. Der Nenndurchmesser D des Schneidteils 13 des Aufrauwerkzeugs 1, der eine Länge L, z.B. 170 mm hat, ist kleiner als der Innendurchmesser der (nicht gezeigten) zu bearbeitenden Bohrung bzw. zylindrischen Innenoberfläche. In der gezeigten Ausführungsform bildet das Aufrauwerkzeug 1 daher ein Schaftfräswerkzeug mit einem Werkzeuggrundkörper 10, der sich funktional in den Schaftabschnitt 11 und den Aufnahmeabschnitt 12 unterteilen lässt, auf dem die Schneidelemente 20 angeordnet sind.

Jedes Schneidelement 20 ist aus einem PKD (Polykristalliner Diamant)-Werkstoff gebildet und in einer jeweiligen Kassette 30 eingespannt gehaltert. Jedes Schneidelement 20 hat im Besonderen eine dem Profil der zu erzeugenden Mikrorillenstruktur entsprechende filigrane Verzahnung aus einer Vielzahl einzelner, in einem axialen Abstand voneinander angeordneter Schneidzähne 21 (vgl. hierzu Fig. 2a bis Fig. 2c). Das durch die Schneidzähne 21 bestimmte mehrzahnige Schneidprofil jedes Schneidelements 20 ist auf die zu erzeugende, gewünschte Mikrostruktur abgestimmt.

In der gezeigten Ausführungsform ist der Großteil der Schneidzähne 21 der Schneidelemente 20 in gleichen axialen Abständen von ca. 80 µm, d.h. mit gleicher axialer Teilung, angeordnet und mit gleichen im Wesentlichen rechteckigen Zahnprofilen versehen. In der gezeigten Ausführungsform haben die Schneidzähne 21 der Schneidelemente 20 jeweils eine Länge von ca. 300 µm und eine Höhe im Bereich von ca. 400 µm. Dieses Schneidprofil ist aber nicht zwingend, und kann daher variieren.

In der Nähe des distalen (schaftfernen) sowie des proximalen (schaftnahen) Endes des Schneidteils 13 ist jeweils eine größere Zahnlücke 22 von ca. 1600 µm in den Mikroverzahnungsprofilen der entsprechenden Schneidelemente 20 vorgesehen, um Anfang und Ende der bearbeiteten Fläche zu markieren.

Des Weiteren sind die in einem axialen Abstand voneinander angeordneten Schneidzähne 21 aller Schneidelemente 20 axial in einer Reihe, also parallel zur Drehachse 2 angeordnet. Die in Umfangsrichtung aufeinander folgenden Schneidelemente 20 weisen das gleiche Schneidprofil auf. Die Schneidelemente 20 der gezeigten Ausführungsform sind also in Axialrichtung gesehen in Vierergruppen von äquidistant (90°) winkelbeabstandeten in Umfangsrichtung aufeinander folgenden gleichprofiligen Schneidelementen 20 angeordnet. Des Weiteren sind die Schneidzähne 21 der jeweils einander diametral gegenüberliegenden Schneidelemente 20a bzw. 20b in Umfangsrichtung fluchtend angeordnet.

Die Schneidelemente 20 sind am Werkzeuggrundkörper 10 zweckmäßig austauschbar festgelegt. Hierzu sind auf dem Aufnahmeabschnitt 12 des Werkzeuggrundkörpers 10 die Kassetten 30 zum lösbaren Haltern der Schneidelemente 20 vorgesehen. Die Festlegung der Kassetten 30 am Werkzeuggrundkörper 10 erfolgt zweckmäßig durch Befestigungsmittel 31, die im dargestellten Beispiel als Schrauben ausgebildet sind. Durch Stelleinrichtungen 32 (hier Stellschrauben bzw. Gewindestifte) sind die Kassetten 30 und damit die darin gehalterten Schneidelemente 20 sowohl in ihrer axialen als auch in ihrer radialen Position einstellbar. In der dargestellten bevorzugten Ausführungsform sind in jeder Gruppe aus in Umfangsrichtung aufeinander folgenden Schneidelementen 20 die jeweils diametral gegenüberliegenden Schneidelemente 20 (bspw. 20a) genau fluchtend eingestellt, während zwischen den jeweils in Umfangsrichtung direkt aufeinanderfolgenden Schneidelementen 20a, 20b über die Kassetten 30 ein Versatz von 500 µm eingestellt wurde, welcher bewirkt, dass die Schneidzähne 21 eines jeden Schneidelements 20 in ihrer Axialposition mittig zwischen den Schneidzähnen 21 der in Umfangsrichtung benachbarten Schneidelementen 20 angeordnet sind.

Die Schneidelemente 20 zweier axial aufeinander folgend angeordneter Vierergruppen sind in Umfangs- oder Schnittrichtung gesehen (hier um 45°) versetzt angeordnet, so dass sie zeitlich versetzt in die zu bearbeitende zylindrische Oberfläche schneiden.

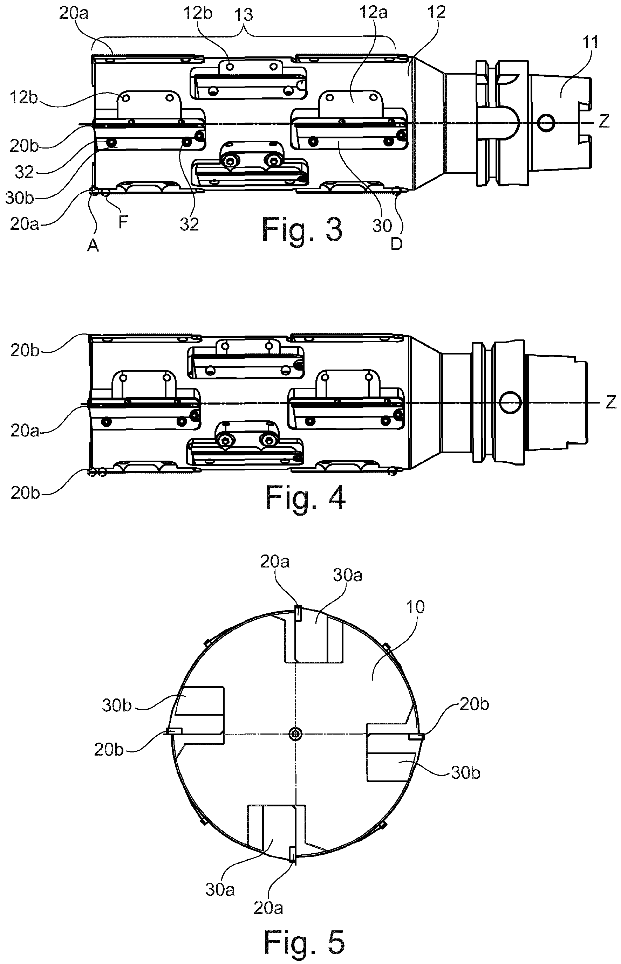

In der gezeigten Ausführungsform weist das Aufrauwerkzeug 1 des Weiteren ein (in den Figuren nicht gezeigtes) innenliegendes Kühlschmiermittelversorgungssystem zum Versorgen der Schneidelemente 20 mit Kühlschmiermittel auf. In Fig. 1 und Fig. 3 sind die in den Aufnahmetaschen 12a liegenden Austrittsöffnungen 12b des Kühlschmiermittelversorgungssystems zu sehen, über den Schneidelementen Kühlschmiermittel zugeführt wird.

In der gezeigten Ausführungsform hat der aus den Schneidelementen 20 gebildete Schneidteil 13 des Aufrauwerkzeugs 1 eine vorbestimmte axiale Länge, die wenigstens so groß ist wie die Länge der aufzurauenden zylindrischen Oberfläche. Es können folglich alle Nuten mit einem Schnitt erzeugt werden. Die axial benachbarten Schneidelementgruppen überlappen sich in Axialrichtung um einen geringen Betrag (hier 500µm) um gemeinsam ein lückenloses Schneidprofil über den gesamten Schneidteil 13 zu bilden. Man könnte auch sagen, dass sich die mehrzahnigen Schneidprofile der axial benachbarten Gruppen von Schneidelemente 20 in Umfangs-oder Schnittrichtung gesehen überdecken/überlagern.

Zum Aufrauen einer zylindrischen Oberfläche wird das Aufrauwerkzeug 1 erfindungsgemäß zunächst außerhalb der zu bearbeitenden zylindrischen Oberfläche so in Position gebracht, dass die Längsmittel- oder Drehachse 2 des Aufrauwerkzeugs 1 mit der Bohrungsachse fluchtet. Dann wird das drehende Aufrauwerkzeug 1 entlang der Bohrungsachse bis in eine gewünschte axiale Tiefe in die Bohrung ein- und anschließend radial soweit nach außen gefahren, bis die Schneidzähne 21 bis zu einer gewünschten radialen Tiefe in die zylindrische Oberfläche einschneiden. Mit dem der gewünschten radialen Tiefe entsprechenden Radius wird das Aufrauwerkzeug 1 dann auf einer 360°-Kreisbahn um die Bohrungsachse bewegt. Nach erfolgter 360°-Zirkularbewegung wird das Aufrauwerkzeug wieder radial nach innen zurück und entlang der Bohrungsachse aus der Bohrung heraus gefahren.

Mit dem erfindungsgemäßen Aufrauwerkzeug kann daher in einem Bearbeitungsgang, d.h. in einer 360°-Zirkularbewegung, gleichzeitig eine Vielzahl kreisförmig umlaufender Mikrorillen in die zylindrische Oberfläche geschnitten werden. Das durch die Schneidzähne bestimmte Schneidprofil jedes Schneidelements ist auf die zu erzeugende, gewünschte Mikrostruktur abgestimmt.

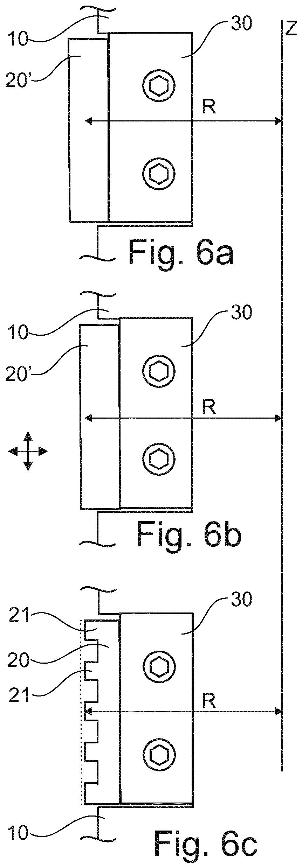

Das vorstehend ausführlich beschriebene und in den Figuren 1 bis 5 dargestellte Aufrauwerkzeug zeichnet sich besonders durch das Verfahren aus, in welchem es hergestellt wurde (vgl. Fig. 6a bis 6c). In diesem wird zunächst der Werkzeuggrundkörper 10 bzw. die an diesem vormontierten Kassetten 30 mit Schneidelementrohlingen 20' bestückt (vgl. Fig. 6a). Es wird also quasi ein Aufrauwerkzeugrohling vormontiert, dessen Schneidelementrohlingen 20' das charakteristische Mikroverzahnungsprofil noch fehlt. Die freie Kante (spätere Schneide) des so vormontierten Schneidelementrohlings 20' weicht noch deutlich vom späteren Nenndurchmesser (hier durch Radius R dargestellt) ab. In einem vorteilhaften jedoch optionalen Fertigungsschritt (vgl. Fig. 6b) findet eine Vorjustierung der Schneidelementrohlinge 20' über die axiale und radiale Einstellbarkeit der Kassetten 30 statt, wodurch die freie Kante der Schneidelementrohlinge bereits deutlich näher am Nenndurchmesser R liegt und beim späteren Einbringen der Mikroverzahnung weniger Material abgetragen werden muss, was den zusätzlichen Vorteil einer schnelleren Fertigung mit sich bringt. In einem letzten Schritt (vgl. Fig. 6c) wird in einem thermischen Abtrageverfahren, genauer gesagt durch Funkenerodieren, die Mikroverzahnung bzw. das endgültige Schneidprofil in die Schneidelementrohlinge 20' eingebracht. Im selben Zuge wird jeder einzelne Schneidzahn 21 auf das exakte Maß seiner axialen Position und des Nenndurchmessers R (Soll-Flugkreis) des Werkzeugs gebracht. Das Einbringen der Mikroverzahnung im vormontierten Zustand hat den Vorteil, dass eine viel höhere Rundlaufgenauigkeit und Spurgenauigkeit der einzelnen Schneidzähne erreicht werden kann, als dies bei einer manuellen Feinjustierung der Schneidelemente mittels der Kassetten möglich wäre. Für diesen Schritt sind alternativ sämtliche dem Fachmann geläufige thermische Abtrageverfahren, bspw. Laserstrahlabtragen, geeignet.

Abweichend von der anhand der Figuren beschriebenen bevorzugten Ausführungsform kann das erfindungsgemäße Aufrauwerkzeug beispielsweise wie folgt abgewandelt werden.

Im Unterschied zu der gezeigten Ausführungsform kann die Zahl der Schneidelemente größer oder kleiner als zwölf sein. Über die Zahl der Schneidelemente lässt sich die Länge des Schneidteils des Aufrauwerkzeugs an die Länge der in einer 360°-Zirkularbewegung aufzurauenden zylindrischen Oberfläche anpassen.

Der Schneidteil kann aus Schneidelemente gebildet sein, die hinsichtlich der Zahl der Schneidelemente und des Schneidprofils der Schneidelemente gleich konfiguriert sind. Anders ausgedrückt heißt das, dass die abgewandelte Gestaltung der Mikroverzahnungsprofile im Bereich des schaftfernen und des schaftnahen Endes des Schneidteils, nicht notwendig ist.

Des Weiteren die Schneidzähne statt eines Rechteckprofils beispielsweise auch Rund-, Trapez- und/oder Schwalbenschwanzprofile oder dergleichen sowie beliebige Kombinationen der vorgenannten Profile aufweisen. Die Schneidzähne können des Weiteren symmetrische und/oder symmetrische Querschnittsprofile aufweisen oder kombinieren.

Der Werkstoff der Schneidelemente ist nicht auf einen PKD-Werkstoff beschränkt und umfasst alle für eine spanabtragende Bearbeitung gängigen Werkstoffe, z.B. Hartmetall oder dergleichen.

Des Weiteren können die Schneidelemente aus Schneidplatten, Schneidleisten, Schneideinsätzen oder vergleichbaren Schneidkörpern gebildet sein.

Des Weiteren kann die Zahl der in gleichen Winkelabständen, d.h. mit gleicher Winkelteilung, voneinander angeordneten Schneidelementen von vier abweichen.

Abweichend von der gezeigten Ausführungsform kann der Abstand zweier axial aufeinanderfolgend angeordneter Schneidelemente so eingestellt werden, dass sich die mehrzahnigen Schneidprofile der axial benachbarten Gruppen von Schneidelemente in Umfangs- oder Schnittrichtung gesehen nicht überdecken, sondern die sich durch die Schneidelemente erzeugten Mikrostrukturen axial bündig oder mit einem definierten Abschnitt aufeinander folgen.

Statt des gezeigten HSK-Schaftabschnitts kann das Aufrauwerkzeug einen SK (Steilkegel)-Schaftabschnitt oder dergleichen aufweisen. Darüber hinaus kann ein Schaftabschnitt fehlen und der dann aus dem zapfenartigen Aufnahmeabschnitt gebildete Grundkörper in anderer Weise auf- oder eingespannt sein.

Das innenliegende Kühlschmiermittelversorgungssystem zum Versorgen der Schneidelemente mit Kühlschmiermittel ist nicht zwingend notwendig.

### Bezugszeichen

- 1: Aufrauwerkzeug;
- 2: Drehachse;
- 10: Werkzeuggrundkörper;
- 11: Schaftabschnitt;
- 12: Aufnahmeabschnitt;
- 12a: Aufnahmetaschen/Ausnehmungen;
- 12b: Kühlmittelaustrittsöffnung
- 13: Schneidteil
- 20: Schneidelement;
- 20': Schneidelementrohling;
- 30: Kassette/Schneidenträger;
- 31: Befestigungsmittel;
- 32: Einstellschraube/Gewindestift;
- R: Nenndurchmesser.

## Patentansprüche

1. Verfahren zur Herstellung eines Aufrauwerkzeugs (1), insbesondere eines Zirkularfräsers, mit den Schritten:
- Bestücken einer Mantelfläche eines um eine Drehachse (2) drehantreibbaren Werkzeuggrundkörpers (10) mit zumindest einem Schneidelementrohling (20'), sodass eine freie Kante des Schneidelementrohlings (20') im montierten Zustand aus der Mantelfläche hervorsteht;
- Einbringen einer Mikroverzahnung mit einer Vielzahl axial beabstandeter Schneidzähne (21) in die freie Kante des Schneidelementrohlings (20') und gleichzeitiges Einstellen der einzelnen Schneidzähne auf einen vorbestimmten Nenndurchmesser durch ein thermisch abtragendes Fertigungsverfahren, bevorzugt durch Erodieren, im am Werkzeuggrundkörper (10) vormontierten Zustand
**dadurch gekennzeichnet, dass**
beim Bestücken des Werkzeuggrundkörpers (10) mit den Schneidelementrohlingen (20') die Schneidelementrohlinge (20') in am Werkzeuggrundkörper montierten axial und radial einstellbaren Kassetten (30) lösbar fixiert und anschließend axial und/oder radial vorjustiert werden, bevor die Mikroverzahnung eingebracht wird.

2. Verfahren gemäß Anspruch 1, **dadurch gekennzeichnet, dass** beim Bestücken des Werkzeuggrundkörpers (10) eine Vielzahl von Schneidelementrohlingen (20') in Axial- und/oder Umfangsrichtung versetzt am Werkzeuggrundkörper montiert werden; und
die Mikroverzahnung im vormontierten Zustand durch das thermisch abtragende Verfahren in die jeweiligen freien Kanten der Schneidelementrohlinge (20') eingebracht wird.

3. Verfahren gemäß Anspruch 2, **dadurch gekennzeichnet, dass**
beim Bestücken des Werkzeuggrundkörpers (10) zumindest ein erster und ein zweiter Schneidelementrohling (20') in Umfangsrichtung fluchtend und voneinander winkelbeabstandet, insbesondere einander diametral gegenüberliegend, an der Mantelfläche des Werkzeuggrundkörpers (10) montiert werden; und
beim Einbringen der Mikroverzahnung der erste und der zweite Schneidelementrohling (20') derart abtragend bearbeitet werden, dass die einzelnen Schneidzähne (21) der jeweilig resultierenden Schneidelemente (20) nach dem Abtragen in Umfangsrichtung fluchtend angeordnet sind.

4. Verfahren gemäß nach einem der vorhergehenden Ansprüche, **dadurch gekennzeichnet, dass** beim Einbringen der Mikroverzahnung jeder Schneidzahn (21) als ein durch eine vorgegebene Länge und Höhe definiertes Rechteckprofil gefertigt wird.

5. Verfahren gemäß Anspruch 4, **dadurch gekennzeichnet, dass** die vorgegebene Länge im Bereich von 200 µm bis 400 µm und die vorgegebene Höhe im Bereich von 60 µm bis 300 µm liegt.

6. Verfahren gemäß Anspruch 4 oder 5, **dadurch gekennzeichnet, dass** der axiale Abstand zwischen zwei aufeinanderfolgenden Schneidzähnen (21) im Bereich von 100 µm bis 1000 µm liegt.

7. Verfahren gemäß einem der Ansprüche 1 bis 6, **dadurch gekennzeichnet, dass** nach dem Einbringen der Mikroverzahnung in die Schneidelemente (20), mittels der Kassetten (30) ein vorbestimmter Versatz in Axialrichtung, vorzugsweise zwischen 100 µm und 1000 µm, zwischen jeweils in Umfangsrichtung aufeinanderfolgenden Schneidelementen (20) eingebracht wird.

8. Verfahren gemäß einem der Ansprüche 1 bis 7, **dadurch gekennzeichnet, dass** die Schneidelementrohlinge (20') aus PKD gefertigt sind.

9. Aufrauwerkzeug (1), insbesondere Zirkularfräser mit einem um eine Drehachse drehantreibbaren Werkzeuggrundkörper (10) und zumindest einem in einer Mantelfläche des Werkzeuggrundkörpers (10) angeordneten Schneidelement (20),
**dadurch gekennzeichnet, dass**
das zumindest eine Schneidelement (20) eine im am Werkzeuggrundkörper (10) vormontierten Zustand in einem abtragenden Verfahren nach einem der vorgehenden Ansprüche 1 bis 8 eingebrachte und auf ein vorbestimmtes Nennmaß gebrachte Mikroverzahnung mit einer Vielzahl axial beabstandeter Schneidzähne (21) aufweist.

## Claims

1. A method for producing a roughening tool (1), in particular a circular milling cutter, comprising the steps of
- fitting at least one cutting element blank (20') to a lateral surface of a basic tool body (10) which can be driven in rotation about an axis of rotation (2), so that a free edge of the cutting element blank (20') protrudes from the lateral surface in the assembled state;
- introducing a micro-toothing including a plurality of axially spaced cutting teeth (21) into the free edge of the cutting element blank (20') and simultaneously setting the individual cutting teeth to a predetermined nominal diameter by a thermal material removing manufacturing process, preferably by electrical discharge machining, in the preassembled state on the basic tool body (10),
**characterized in that**
when fitting the cutting element blanks (20') to the basic tool body (10), the cutting element blanks (20') are releasably fixed in axially and radially adjustable cassettes (30) mounted on the basic tool body and then are axially and/or radially pre-adjusted before the micro-toothing is introduced.

2. The method according to claim 1, **characterized in that**, in fitting the basic tool body (10), a plurality of cutting element blanks (20') are mounted on the basic tool body offset in an axial and/or circumferential direction; and
the micro-toothing in the pre-assembled state is introduced in the respective free edges of the cutting element blanks (20') by the thermal material removing process.

3. The method according to claim 2, **characterized in that**
in fitting the basic tool body (10), at least a first and a second cutting element blank (20') are mounted on the lateral surface of the basic tool body (10) in alignment in the circumferential direction and at an angular distance from one another, in particular diametrically opposite to one another, and
when introducing the micro-toothing, the first and second cutting element blank (20') are machined in a material removing manner such that the individual cutting teeth (21) of the respectively resulting cutting elements (20) are aligned in a circumferential direction after removal.

4. The method according to any of the preceding claims, **characterized in that**, when introducing the micro-toothing, each cutting tooth (21) is manufactured as a rectangular profile defined by a predetermined length and height.

5. The method according to claim 4, **characterized in that** the predetermined length is in the range from 200 µm to 400 µm and the predetermined height is in the range from 60 µm to 300 µm.

6. The method according to claim 4 or 5, **characterized in that** the axial distance between two successive cutting teeth (21) is in the range from 100 µm to 1000 µm.

7. The method according to any of claims 1 to 6, **characterized in that**, after introducing the micro-toothing in the cutting elements (20), a predetermined offset in the axial direction, preferably between 100 µm and 1000 µm, is introduced by means of the cassettes (30) between respectively successive cutting elements (20) in the circumferential direction.

8. The method according to any of claims 1 to 7, **characterized in that** the cutting element blanks (20') are made of PCD.

9. A roughening tool (1), in particular a circular milling cutter including a tool base body (10) which can be driven in rotation about an axis of rotation and at least one cutting element (20) arranged in a lateral surface of the tool base body (10),
**characterized in that**
the at least one cutting element (20) has a micro-toothing introduced in the preassembled state on the basic tool body (10) in a material removing process according to any of preceding claims 1 to 8 and brought to a predetermined nominal dimension, including a plurality of axially spaced cutting teeth (21).

## Revendications

1. Procédé de fabrication d'un outil de rugosification (1), en particulier d'une fraise circulaire, avec les étapes suivantes :
- l'équipement d'une surface enveloppe d'un corps de base d'outil (10) pouvant être entraîné en rotation autour d'un axe de rotation (2) en au moins une ébauche d'élément de coupe (20') de sorte qu'une arête libre de l'ébauche d'élément de coupe (20') fasse saillie dans l'état monté de la surface enveloppe ;
- l'introduction d'une microdenture avec une pluralité de dents de coupe (21) espacées axialement dans l'arête libre de l'ébauche d'élément de coupe (20') et le réglage simultané des dents de coupe individuelles à un diamètre nominal prédéterminé par un procédé de fabrication par enlèvement thermique, de préférence par érosion, dans l'état prémonté au niveau du corps de base d'outil (10)
**caractérisé en ce que**
lors de l'équipement du corps de base d'outil (10) en ébauches d'élément de coupe (20'), les ébauches d'élément de coupe (20') sont fixées de manière amovible dans des cassettes (30) réglables axialement et radialement montées au niveau du corps de base d'outil et sont ensuite préajustées axialement et/ou radialement avant que la microdenture ne soit introduite.

2. Procédé selon la revendication 1, **caractérisé en ce que** lors de l'équipement du corps de base d'outil (10), une pluralité d'ébauches d'élément de coupe (20') est montée en déport dans le sens axial et/ou périphérique au niveau du corps de base d'outil ; et
la microdenture est introduite dans l'état prémonté par le procédé d'enlèvement thermique dans les arêtes libres respectives des ébauches d'élément de coupe (20').

3. Procédé selon la revendication 2, **caractérisé en ce que**
lors de l'équipement du corps de base d'outil (10), au moins une première et une seconde ébauches d'élément de coupe (20') sont montées alignées dans le sens périphérique et à distance angulaire l'une de l'autre, en particulier à l'opposé diamétralement l'une de l'autre, au niveau de la surface enveloppe du corps de base d'outil (10) ; et
lors de l'introduction de la microdenture, la première et la seconde ébauches d'élément de coupe (20') sont usinées par enlèvement de telle manière que les dents de coupe (21) individuelles des éléments de coupe résultants respectivement (20) soient agencées alignées dans le sens périphérique après l'enlèvement.

4. Procédé selon l'une quelconque des revendications précédentes, **caractérisé en ce que**, lors de l'introduction de la microdenture, chaque dent de coupe (21) est fabriquée comme un profil rectangulaire défini par une longueur et une hauteur prédéfinies.

5. Procédé selon la revendication 4, **caractérisé en ce que** la longueur prédéfinie se situe dans la plage de 200 µm à 400 µm et la hauteur prédéfinie dans la plage de 60 µm à 300 µm.

6. Procédé selon la revendication 4 ou 5, **caractérisé en ce que** la distance axiale entre deux dents de coupe (21) successives se situe dans la plage de 100 µm à 1000 µm

7. Procédé selon l'une quelconque des revendications 1 à 6, **caractérisé en ce qu'**après l'introduction de la microdenture dans les éléments de coupe (20), un déport prédéterminé dans le sens axial, de préférence entre 100 µm et 1000 µm, est introduit au moyen des cassettes (30) entre des éléments de coupe (20) successifs dans le sens périphérique respectivement.

8. Procédé selon l'une quelconque des revendications 1 à 7, **caractérisé en ce que** les ébauches d'élément de coupe (20') sont fabriquées en PKD.

9. Outil de rugosification (1), en particulier fraise circulaire avec un corps de base d'outil (10) entraînable en rotation autour d'un axe de rotation et au moins un élément de coupe (20) agencé dans une surface enveloppe du corps de base d'outil (10),
**caractérisé en ce que**
l'au moins un élément de coupe (20) présente une microdenture introduite dans l'état prémonté au niveau du corps de base d'outil (10) dans un procédé d'enlèvement selon l'une quelconque des revendications précédentes 1 à 8 et amenée à une dimension nominale prédéterminée avec une pluralité de dents de coupe (21) espacées axialement.
